Europäisches Patentamt

European Patent Office

Office européen des brevets

(11) Veröffentlichungsnummer: **0 336 170**
**A1**

## EUROPÄISCHE PATENTANMELDUNG

(21) Anmeldenummer: 89104795.3

(22) Anmeldetag: 17.03.89

(51) Int. Cl.⁴: **H01M 2/16 , H01M 6/50 , H01M 6/16**

(30) Priorität: 06.04.88 JP 86029/88

(43) Veröffentlichungstag der Anmeldung:
**11.10.89 Patentblatt 89/41**

(84) Benannte Vertragsstaaten:
**BE CH DE ES FR GB IT LI NL**

(71) Anmelder: **Firma Carl Freudenberg
Höhnerweg 4
D-6940 Weinheim/Bergstrasse(DE)**

(72) Erfinder: **Nakanishi, Terumi
906-3, Komahane, Sohwa-machi,
Sashima-gun
Ibaraki-ken, 306-02(JP)**
Erfinder: **Hirooka, Masaki
1399, Komahane, Sohwa-machi,
Sashima-gun
Ibaraki-ken, 306-02(JP)**
Erfinder: **Nobutoshi, Tokutake
1399, Komahane, Sohwa-machi,
Sashima-gun
Ibaraki-ken, 306-02(JP)**

(74) Vertreter: **Weissenfeld-Richters, Helga, Dr.
Höhnerweg 2
D-6940 Weinheim/Bergstrasse(DE)**

(54) Separator für Lithiumbatterien.

(57) Ein Separator für Lithiumbatterien besteht aus einer porösen Membran aus Hochdruckpolyethylen mit einem Schmelzbereich von $\leq 120\,^\circ$ C und einem damit laminierten porösen Träger aus Faservliesstoff.

EP 0 336 170 A1

## Separator für Lithiumbatterien

Die vorliegende Erfindung befaßt sich mit einem Separator für Lithiumbatterien.

Eine große Gefahr stellt das Platzen oder Explodieren von Lithiumbatterien im Falle eines Kurzschlusses dar. Die dabei sofort entstehenden hohen Entladeströme führen zu einem solchen Temperaturanstieg, daß der innere Druck der Batterie schlagartig zunimmt. Dies bedeutet nicht nur eine Gefahr für die mit solchen Batterien betriebenen Geräte, sondern ebenso für deren Benutzer.

Zur Lösung dieses Problems ist bereits in der japanischen Patent-Offenlegungsschrift Nr. 60-52 vorgeschlagen worden, den porösen Separator mit feinem Polyethylenpulver zu beschichten. Ferner wird in der japanischen Patent-Offenlegungsschrift Nr. 60-136161 gelehrt, ein niedrigschmelzendes Harz auf den porösen Separator aufzutragen. Bei Kurzschluß bewirkt die entstehende Hitze ein Schmelzen des Pulvers bzw. der Harzbeschichtung; diese Schmelze verschließt die Poren des Separatormaterials, was zu einer Erhöhung des inneren elektrischen Widerstandes führt, somit zu einem Unterbrechen des Kurzschlußstromes und damit der Hitze- und Druckentwicklung.

Die Nachteile dieser Lösungen sind darin zu sehen, daß auch bei Normalbetrieb ein gewisser Teil der Poren durch die Beschichtung verschlossen ist, wodurch ein erhöhter innerer elektrischer Widerstand stets in Kauf genommen werden muß. Ein weiterer Nachteil liegt in der Ansprechzeit des Systems bei Kurzschluß: Während der Zeit, in der die Beschichtung angeschmolzen wird, um dann in flüssiger Form die Poren zu verschließen, können Hitze und Druck noch so weit ansteigen, daß innerhalb dieser kurzen Zeit ebenfalls eine Explosion stattfinden kann.

Die vorliegende Erfindung hat zur Aufgabe, einen Separator für Lithiumbatterien anzugeben, der Kurzschlußströme sofort unterbindet und bei dem im Normalbetrieb keine Erhöhung des inneren elektrischen Widerstandes in Kauf genommen werden muß. Die Lösung der gestellten Aufgabe besteht in einem Separator mit den Merkmalen des Patentanspruchs 1. Auf vorteilhafte Ausgestaltungen nehmen die Unteransprüche Bezug.

Anhand der Abbildungen soll der erfindungsgemäße Separator näher erläutert werden.

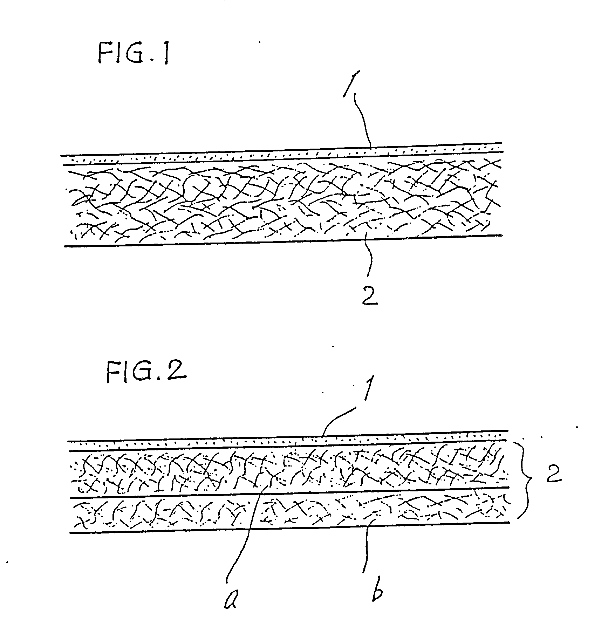

Figur 1 zeigt einen vergrößerten Teilquerschnitt dieses Separators, Figur 2 einen ebensolchen Querschnitt durch eine bevorzugte Ausführungsform.

Es sei zunächst Fig. 1 betrachtet: Eine poröse Hochdruckpolyethylen-Membran 1 niederer Dichte mit einem Schmelzpunkt von 120°C oder darunter ist auf einer Seite eines Vliesstoffträgers 2 aus Polypropylen-Fasern auflaminiert. Wichtig und erfindungswesentlich ist, daß die poröse Membran 1 per se als Separator wirkt und der poröse Vliesstoffträger 2 lediglich der Formhaltung der Membran dient, um deren Bruch zu verhindern.

In Fig. 2 liegt die beschriebene Membran 1 auf einem zweischichtigen porösen Vliesstoffträger 2 auf; dabei befindet sich zwischen dem Faservliesstoff b aus Polypropylenfasern und der Membran 1 eine Vliesstoffschicht a aus Polyesterfasern.

Zur Herstellung der porösen Membran wird Hochdruckpolyethylen (auch als Polyethylen niedriger Dichte bezeichnet) mit einem Schmelzbereich von 120°C oder darunter, in welches wasserlösliches Material eingemischt ist, als wäßrige Dispersion oder Paste auf den Trägervliesstoff aufgetragen.

Soll ein Trägermaterial gemäß Fig. 1 verwendet werden, so ist es, da Polypropylenfasern sehr wasserabstoßend wirken, zweckmäßig, die genannte wäßrige Dispersion oder Paste im Transferdruckverfahren auf dieses Trägermaterial aufzutragen. Bei dieser eingeführten Methode wird zuerst die Dispersion oder Paste auf - mit Silikon beschichtetes - Trennpapier aufgegossen, getrocknet und anschließend bei einer Temperatur von 120°C und unter Druck innerhalb von wenigen Sekunden auf die poröse Polypropylenfaser-Vliesstoffunterlage übertragen unter Entfernen des Trennpapiers.

Gewünschtenfalls kann dabei die bereits auf diese Weise erhaltene, sehr feste Bindung zwischen Träger und Folie weiter verbessert werden, indem den Polypropylenfasern ein geringer Anteil Bindefasern, z.B. aus Polyethylen, beigemischt wird, welche unter 120°C schmelzen und somit beim Aufpressen der Folie bei 120°C an- und mit dieser verschmelzen.

Bei der Verwendung des bevorzugten Zweischichten-Trägermaterials gemäß Fig. 2 erübrigt sich die Anwendung des Transferdruckverfahrens. Auf die Polyesterfaser-Vliesstoffschicht des Trägers wird die beschriebene wäßrige Paste oder Dispersion direkt aufgegossen und unter Druck bei 120°C verpreßt. Dabei geht das Polyethylen eine dauerhafte, schwer lösbare physikalische Bindung mit den Polyesterfasern ein.

Das der wäßrigen Dispersion oder Paste aus Polyethylen in Mengen von 30 bis 50 Gew.-% (naß) zugesetzte, wasserlösliche Material ist z.B. Natrium-Alginat mit einem Feststoffanteil von 15% oder Polyvinylacetat. Nach dem Auftragen des Polyethylens auf den Vliesstoffträger nach einem der beiden beschriebenen Verfahren wird das Laminat mehrmals mit 50°C warmem Wasser behandelt, auf diese Weise das wasserlösliche Material aus der Folie ausgewaschen und anschließend das Ganze getrocknet bei nicht über 100°C. Mit dem Auswaschen entstehen die feinen Poren in der Folie.

Der Anteil des wasserlöslichen Materials in der wäßrigen Paste oder Dispersion aus Hochdruckpolyethylen ist durch Vorversuche leicht so ermittelbar, daß die Luftdurchlässigkeit der fertigen porösen Membran im Bereich von 160 bis 1200 s (Gurley: 100 cm³) liegt.

Die Dicke der porösen Membran liegt im Bereich zwischen 40 und 150 μm.

Der Separator gemäß der Erfindung wirkt so, daß im Falle eines Kurzschlusses mit plötzlichem Anstieg der Temperatur die poröse Membran als solche schmilzt und ihre inneren Poren somit schließt. Der innere elektrische Widerstand wird dadurch sofort erhöht, weil nicht erst ein zweites, zusätzliches Material erhitzt werden muß, sondern lediglich die Separatorenmembran direkt.

Ein Zerlaufen der flüssig werdenden Membran ist dabei nicht zu befürchten, da diese auf den Faservliesstoff-Träger fest angebunden ist.

Ein weiterer Vorteil liegt darin, daß bei der Hitzeentwicklung alle Poren der Membran gleichzeitig geschlossen werden. Im Normalbetrieb hingegen stehen sämtliche Poren des Separators zur Verfügung; der innere Widerstand ist dann nicht erhöht.

In einer bevorzugten Variante des erfindungsgemäßen Separators ist die Membran aus zwei Schichten verschieden hoher Porosität aufgebaut. Diese Ausgestaltung bildet ein besonders rasch sich schließendes Porensystem.

## Beispiel 1

Ein poröser Faservliesstoff-Träger wird hergestellt aus einer 25 g/m² schweren Polyesterfaser-Schicht und einer 25 g/m² schweren Polypropylen-Faserschicht. Diese Herstellung erfolgt zweckmäßig durch ein übliches Naßverfahren über eine Faseraufschlämmung, die auf einem Sieb abgelegt und getrocknet werden kann.

Die Polyesterfaser-Seite des Trägers wird mit einer Kunstharzlösung der nachfolgend beschriebenen Zusammensetzung zweimal beschichtet, wobei jeweils die Dicke des Naßauftrages 50 μm beträgt, jeweils gefolgt durch einen Trockenprozeß bei 120°C für 2 Minuten.

Zusammensetzung:

Wäßrige Hochdruckpolyethylen-Dispersion (Festgehalt 40 Gew.-%); das Polyethylengranulat erhältlich unter dem Namen Chemipearl M-200 von MITSUI Petrochem. Co., Ltd., Japan; und Natrium-Alginat (Feststoffgehalt 15 %).

Beide Bestandteile werden im Verhältnis 1 : 1 angewendet.

Der Film wird nach dem Auftragen durch Kalanderrollen gepreßt bei einer Temperatur von 120°C und einem Liniendruck von 100 kp/cm. Anschließend wird mit Wasser von 50°C, welches 1% gebrannte Soda enthält, das Laminat immergiert, sodann mit Wasser von 35°C das Natrium-Alginat ausgewaschen und schließlich der Schichtenverbund bei 70°C getrocknet.

Dieser Separator zeigt die folgenden Eigenschaften:

| | |
|---|---|
| Gewicht der porösen Membran: | 32,8 g/m² |
| Dicke des Separators: | 0,11 mm |
| Luftdurchlässigkeit: | 163,2 s (Gurley: 100 cm³) |

Der Separator dieses Beispiels wurde in der Hitze behandelt, um die Veränderung der Luftdurchlässigkeit zu beobachten:

3

| | Luftdurchlässigkeit (Gurley: 100 cm³) |
|---|---|
| 1 min bei 120° C: | 1336 s |
| 2 min bei 120° C | 2272 s |

Die obigen Ergebnisse beweisen, daß die Porosität sofort sinkt, wenn der Separator einer Hitzeeinwirkung ausgesetzt ist.

Beispiel 2

Auf die Polyesterfaser-Seite eines porösen Trägers wie in Beispiel 1 wird eine Schicht der Zusammensetzung a in einer Dicke von 50 μm aufgetragen und sodann eine weitere Schicht der Zusammensetzung b mit gleicher Dicke, gefolgt durch Pressen, Immergieren, Waschen und Trocknen in gleicher Weise wie in Beispiel 1:

Zusammensetzung a:

Zu gleichen Teilen Chemipearl M-200 (Beispiel 1) und Natrium-Alginat (Beispiel 1).

Zusammensetzung b:

Chemipearl M-200 (Beispiel 1): 7 Teile Naßauftrag;
Natrium-Alginat (Beispiel 1): 3 Teile Naßauftrag.

Der nach dem Trocknen erhaltene Separator hat die folgenden Eigenschaften:

| Gewicht der porösen Membran: | 43,8 g/m² |
|---|---|
| Dicke des Separators: | 0,13 mm |
| Hydraulischer Durchflußwiderstand: | 280 mm |
| Luftdurchlässigkeit: | 280 s (Gurley: 100 cm³) |

Der Separator wurde in der Hitze getestet:
120° C, 1 min: Luftdurchlässigkeit (Gurley: 100 cm³): 1586 s;
120° C, 2 min: Luftdurchlässigkeit (Gurley 100 cm³): keine.
Dieser Separator unterscheidet sich von dem von Beispiel 1 dadurch, daß seine poröse Membran doppelschichtig aufgebaut ist, wobei der Anteil der Poren in einer dieser Schichten geringer ist als in der anderen. Daraus folgt der Widerstand gegen hydraulischen Druck von 280 mm. Die Luftdurchlässigkeit ist erwartungsgemäß höher. Diese Ausgestaltung zeigt ein noch schnelleres Verschwinden der Poren bei Einwirkung von Hitze.

Beispiel 3

Ein 15 g/m² schwerer, poröser Polypropylen-Faservliesstoff wird im Naßverfahren hergestellt.
Eine wäßrige Dispersion der Zusammensetzung c wird in einer Dicke von 50 μm auf Silikonpapier aufgetragen. Auf diese Beschichtung folgt eine weitere mit einer wäßrigen Dispersion gleicher Dicke und mit der Zusammensetzung d. Jede dieser beiden Schichten wird separat bei 120° C zwei Minuten lang getrocknet.

| Zusammensetzung c: | |
| --- | --- |
| Chemipearl M-200 (wie Beispiel 1):<br>Chemipearl A-100:<br>Natrium-Alginat (wie Beispiel 1): | Naßauftrag 63 %<br>Naßauftrag 7 %<br>Naßauftrag 30 % |
| Zusammensetzung d: | |
| Chemipearl M-200:<br>Chemipearl A-100:<br>Natrium-Alginat: | Naßauftrag 35 %<br>Naßauftrag 35 %<br>Naßauftrag 30 % |
| (Chemipearl A-100 ist ein käufliches<br>Hochdruckpolyethylen (niedrige Dichte) der Firma<br>MITSUI Petrochem. Co., Ltd., Japan, mit besonders<br>kleiner Partikelgröße). | |

Der Film wird gepreßt und übertragen auf das Polypropylen-Faservlies mittels einer Flachpresse bei einem Flächendruck von 3 kp/cm² und 120°C während 10 s. Danach werden das Immergieren und Auswaschen des Feststoffanteils in Wasser sowie das Trocknen analog Beispiel 1 durchgeführt.

Der entstandene Separator hat die folgenden Eigenschaften:

| | |
| --- | --- |
| Gewicht der porösen Membran: | 44,5 g/m² |
| Dicke des Separators: | 0,05 mm |
| Hydraulischer Durchflußwiderstand: | 750 mm |
| Luftdurchlässigkeit: | 195,6 s (Gurley: 100 cm³) |

Das Beaufschlagen des Separators mit 120°C für 1 min führt zu einer vollständigen Schließung aller Poren bei unendlich hohem Durchgangswiderstand für Luft.

## Ansprüche

1. Separator für Lithiumbatterien, bestehend aus einer porösen Membran aus Hochdruck-Polyethylen mit einem Schmelzbereich von ≤ 120°C, die mit einem porösen textilen Trägermaterial aus Polypropylen-Faservliesstoff laminiert ist, wobei das Laminat eine Gesamtdicke von 40 bis 150μm aufweist.

2. Separator nach Anspruch 1, dadurch gekennzeichnet, daß das textile Trägermaterial aus zwei Faservliesstoff-Schichten zusammengesetzt ist, wobei die membranseitige Schicht aus Polyesterfasern und die außenseitige Schicht aus Polypropylenfasern besteht.

3. Separator nach Anspruch 1 oder 2, dadurch gekennzeichnet, daß die poröse Membran aus zwei Schichten mit unterschiedlicher Porosität besteht.

FIG.1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 201 875 (GRACE & CO.) * Seite 8, Zeilen 15-20; Seite 10, Zeile 5; Seite 11, Zeile 10; Seite 15, Zeilen 4-5 * | 1 | H 01 M 2/16 H 01 M 6/50 H 01 M 6/16 |
| Y | | 2,3 | |
| Y | GB-A-2 160 705 (SANYO ELECTRIC CO., LTD) * Spalte 6; Seite 2, rechte Spalte * | 3 | |
| Y | EP-A-0 246 866 (EASTMAN KODAK CO.) * Seite 3, Zeilen 13,28-31 * | 2 | |
| A | PATENT ABSTRACTS OF JAPAN, Band 9, Nr. 140 (E-321)[1863], 14. Juni 1985; & JP-A-60 23 954 (SANYO DENKI K.K.) 06-02-1985 | 1,2 | |
| A | MACHINE DESIGN, Band 58, Nr. 19, August 1986, Seiten 48, Cleveland, Ohio, US; "9-V lithium battery safer" | 1,2 | |
| A | US-A-4 113 927 (JOHNSON et al.) * Ansprüche * | 1 | |
| A | PATENT ABSTRACTS OF JAPAN, Band 11, Nr. 77 (E-487)[2524], 7. März 1987; & JP-A-61 232 560 (FUJI ELELCTROCHEM CO., LTD) 16-10-1986 | 1 | |
| A | PATENT ABSTRACTS OF JAPAN, Band 7, Nr. 284 (E-217)[1429], 17. Dezember 1983; & JP-A-58 163 144 (HITACHI MAXELL K.K.) 27-09-1983 | 3 | |

**RECHERCHIERTE SACHGEBIETE (Int. Cl.4)**

H 01 M

Der vorliegende Recherchenbericht wurde für alle Patentansprüche erstellt

| Recherchenort | Abschlußdatum der Recherche | Prüfer |
|---|---|---|
| DEN HAAG | 05-07-1989 | CZECH B.P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument

EPO FORM 1503 03.82 (P0403)